# EUROPEAN PATENT APPLICATION

(11) **EP 4 106 327 A1**
(43) Date of publication of application: **21.12.2022**
(21) Application number: 22179328.4
(22) Date of filing: 15.06.2022
(51) Int. Cl.: H04N 7/14, G06V 40/16

(54) **INTELLIGENT MULTI-CAMERA SWITCHING WITH MACHINE LEARNING**

(30) Priority: 16.06.2021 US 202163202566 P; 14.06.2022 US 202217840565
(71) Applicant: Plantronics, Inc., Santa Cruz, California 95060 (US)
(72) Inventor: WANG, Jian David, Santa Cruz, 95060 (US); SPEARMAN, John Paul, Santa Cruz, 95060 (US)
(74) Representative: Optimus Patents Limited

(57) **Abstract**

Multiple cameras in a conference room, each pointed in a different direction. At least a primary camera includes a microphone array to perform sound source localization (SSL). The SSL is used in combination with a video image to identify the speaker from among multiple individuals that appear in the video image. Neural network or machine learning processing is performed on the primary camera video of the identified speaker to determine the facial pose of speaker. The locations of the other cameras with respect to the primary camera have been determined. Using those locations and the facial pose, the camera with the best frontal view of the speaker is determined. That camera is set as the designated camera to provide video for transmission to the far end.

## Description

### CROSS-REFERENCE TO RELATED APPLICATIONS

This application claims the benefit of U.S. Provisional Application No. 63/202,566, filed June 16, 2021, which is incorporated by reference herein in its entirety.

### BACKGROUND OF THE INVENTION

### Field of the Invention

This disclosure relates generally to camera selection in a videoconference.

### Description of the Related Art

The most common configuration of a conference room for videoconferencing has a single camera adjacent a monitor or television that sits at one end of the room. One drawback to this configuration is that if a speaker is looking at someone else in the conference room while talking, the speaker does not face the camera. This means that one or more far end site(s) of the videoconference call only see(s) a side view of the speaker, so the speaker does not appear to be speaking to the far end site(s) of the videoconference call.

Efforts have been made to address this problem by providing multiple cameras in the conference room. The idea is to have the cameras pointed in different directions and then selecting a camera that provides the best view of the speaker, preferably zooming and framing the speaker. The efforts improved the view of the speaker but only in single individual settings, which often were not a problem as the speaker would usually be looking at the monitor and hence the single camera. If multiple individuals were present in the conference room and visible in the various camera views, the efforts did not provide good results.

### SUMMARY OF THE INVENTION

A method, non-transitory processor readable memory, and system comprising identifying the locations of the plurality of cameras other than the primary camera using an image from the video stream of the primary camera; utilizing sound source localization using the microphone array on the primary camera to determine direction information; identifying a speaker in the group of individuals using the sound source localization direction information and an image from the video stream of the primary camera; determining facial pose of the speaker in the image from the video stream; and selecting a camera from the plurality of cameras to provide a video stream for provision to the far end based on the locations of the plurality of cameras other than the primary camera and the facial pose of the speaker.

### BRIEF DESCRIPTION OF THE DRAWINGS

The present invention may be better understood, and its numerous objects, features and advantages made apparent to those skilled in the art by referencing the accompanying drawings. The use of the same reference number throughout the several figures designates a like or similar element.
Figure 1A is an illustration of a conference room containing three cameras, a monitor and desk and chairs;
Figures IB-Figure 5 are illustrations of the conference room of Figure 1A with various individuals, with one individual speaking;
Figure 6 is an illustration of the conference room of Figure 1A with narrower camera angles, various individuals and one individual speaking;
Figure 7 is a flowchart of operation of a videoconferencing system according to an example of this disclosure;
Figure 8 is a flowchart of operation of the camera position detection step of Figure 7 according to an example of this disclosure;
Figure 9 is a flowchart of operation of the best camera search step of Figure 7 according to an example of this disclosure;
Figure 9A is an illustration of keypoints used in the pose determination and pose matching steps according to an example of this disclosure;
Figure 10 is an illustration of division of operations between a codec and a camera according to an example of this disclosure;
Figure 11 is a block diagram of a codec according to an example of this disclosure;
Figure 12 is a block diagram of a camera according to an example of this disclosure;
Figure 13 is a block diagram of the processor units of Figures 11 and 12;
Figure 14 is an illustration of the front view of a camera according to an example of this disclosure;
Figure 15A is an illustration of a conference room that includes six individuals or participants and their best views in a multi camera system;
Figure 15B is an illustration of a composite picture of individual best views; and
Figure 16 is an illustration of a multi-camera system to provide a composite picture of best views of individuals or participants.

### DETAILED DESCRIPTION

Implementations provide for a plurality of cameras embodied in various devices to be placed in an environment, such as conference room. One of the cameras is designated as a primary camera, and is implemented with a microphone array. A video stream is sent from the primary camera to a far end site (s) of a videoconference call. An image from the video stream is used to identify the location of the other cameras. Sound source localization using the microphone array is used to determine sound direction information. A speaker of a group of individuals or participants is identified using the sound source location. A facial pose of the speaker is determined from the video stream. A camera from the group of cameras, including the primary, is selected to provide the video stream based on the identified location of the cameras and determined facial pose.

In the drawings and the description of the drawings herein, certain terminology is used for convenience only and is not to be taken as limiting the examples of the present disclosure. In the drawings and the description below, like numerals indicate like elements throughout.

Throughout this disclosure, terms are used in a manner consistent with their use by those of skill in the art, for example:

Computer vision is an interdisciplinary scientific field that deals with how computers can be made to gain high-level understanding from digital images or videos. Computer vision seeks to automate tasks imitative of the human visual system. Computer vision tasks include methods for acquiring, processing, analyzing and understanding digital images, and extraction of high-dimensional data from the real world to produce numerical or symbolic information. Computer vision is concerned with artificial systems that extract information from images. Computer vision includes algorithms which receive a video frame as input and produce data detailing the visual characteristics that a system has been trained to detect.

Machine learning includes neural networks. A convolutional neural network is a class of deep neural network which can be applied analyzing visual imagery. A deep neural network is an artificial neural network with multiple layers between the input and output layers.

Artificial neural networks are computing systems inspired by the biological neural networks that constitute animal brains. Artificial neural networks exist as code being executed on one or more processors. An artificial neural network is based on a collection of connected units or nodes called artificial neurons, which mimic the neurons in a biological brain. Each connection, like the synapses in a biological brain, can transmit a 'signal' to other neurons. An artificial neuron that receives a signal then processes it and can signal neurons connected to it. The signal at a connection is a real number, and the output of each neuron is computed by some non-linear function of the sum of its inputs. The connections are called edges. Neurons and edges have weights, the value of which is adjusted as 'learning' proceeds and/or as new data is received by a state system. The weight increases or decreases the strength of the signal at a connection. Neurons may have a threshold such that a signal is sent only if the aggregate signal crosses that threshold.

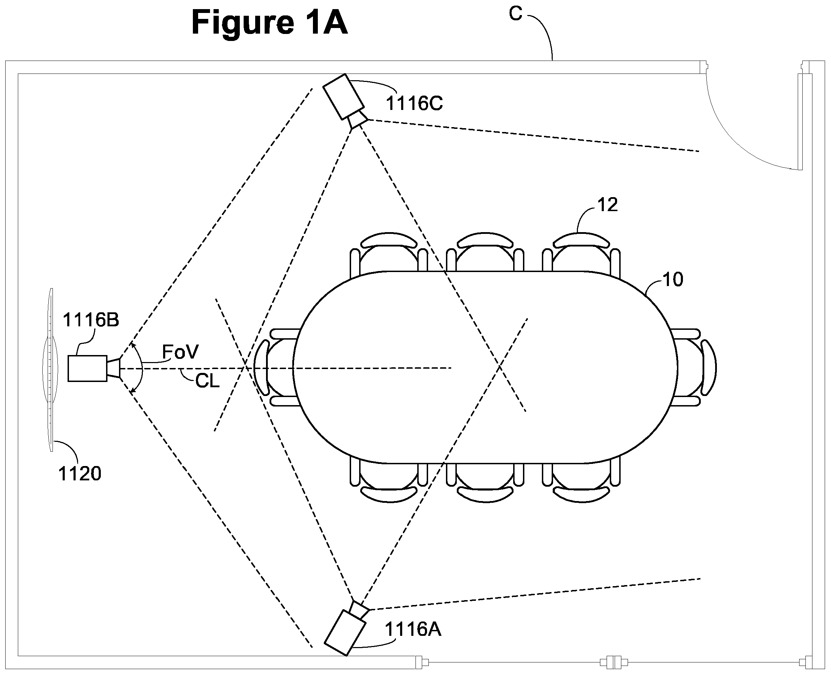

Referring now to Figure 1A, a conference room C configured for use in videoconferencing is illustrated. Conference room C includes a conference table 10 and a series of chairs 12. A series of three cameras 1116A, 1116B and 1116C are provided in the conference room C to view individuals seated in the various chairs 12. In various embodiments, the cameras 1116A, 1116B, 1116C are part of a video bar, pan-tilt zoom cameras, or other type of camera. Implementations further provide that such cameras be connected to connect to a computing device, such as a codec or a laptop computer. It will be further understood that other embodiments are also possible. A monitor or television 1120 is provided to display the far end conference site or sites and generally to provide the loudspeaker output. Each camera 1116A, 1116B, 1116C has a field-of-view (FoV) and an axis or centerline (CL). In the layout of Figure 1A, the cameras 1116A, 1116B, 1116C are positioned such that camera 1116B has its CL centered on the length of the conference table 10 and cameras 1116A and 1116C are at an angle to the conference table 10, so that camera 1116B is designated as a primary camera. This allows the cameras 1116A and 1116C to have a better opportunity to see the faces of individuals seated on the sides of the conference table 10 when the individuals are looking at other individuals in the conference room C, while camera 1116B has a better opportunity to see the faces when the individuals are looking at the monitor 1120. At least the primary camera 1116B includes a microphone array 1214 to be used to do sound source localization (SSL).

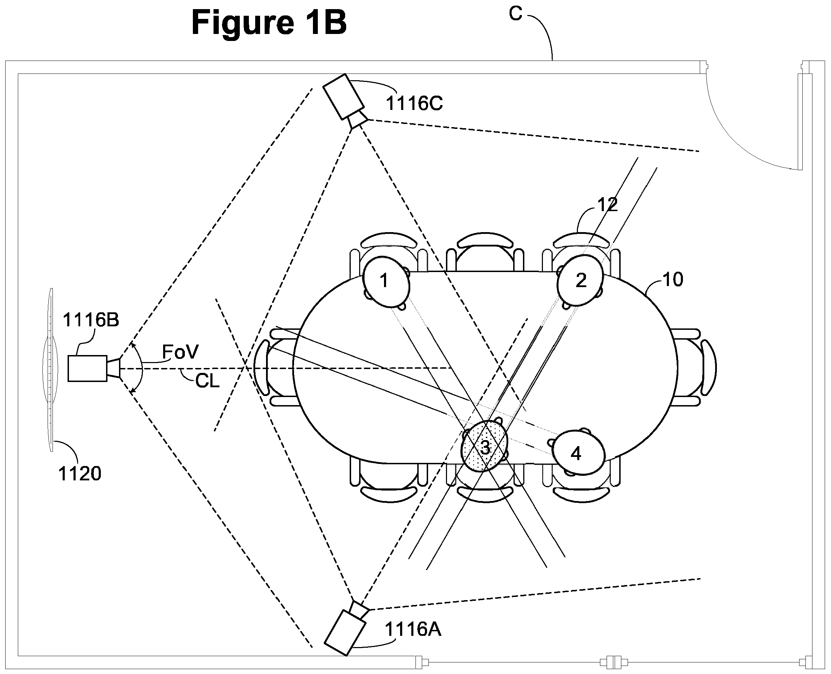

Turning now to Figure 1B, four individuals 1, 2, 3, and 4 are seated in various of the chairs 12. Individual 3 is speaking, as indicated by the shading of individual 3. As individual 3 is speaking, each of the individuals 1, 2 and 4 has turned to look at individual 3. The camera 1116A is viewing the back of the head of individual 3, while camera 1116B is viewing basically the left ear of individual 3 and camera 1116C has the best shot of individual 3's face. Therefore, it is desirable to use the camera 1116C to provide a view of the face of individual 3 for provision to the far end.

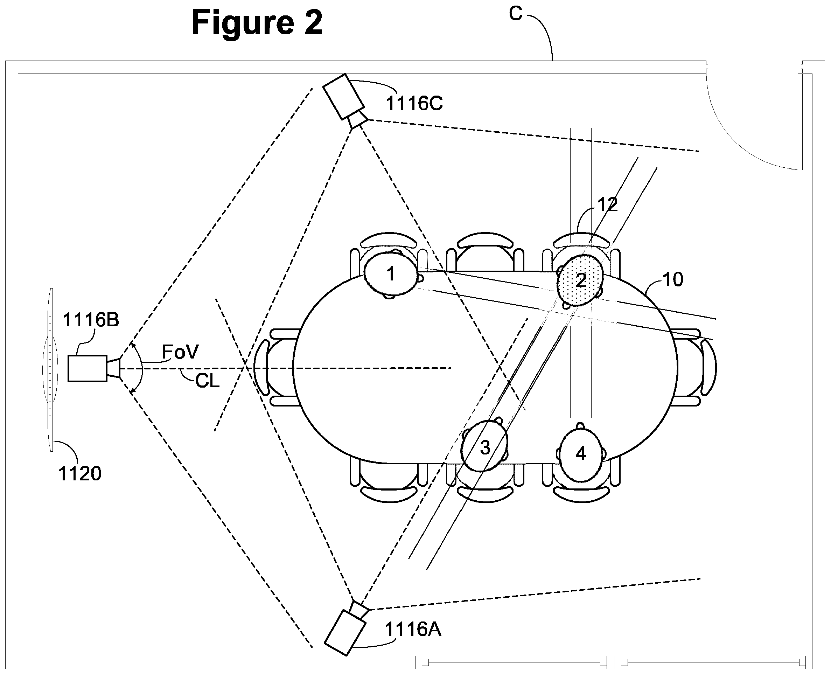

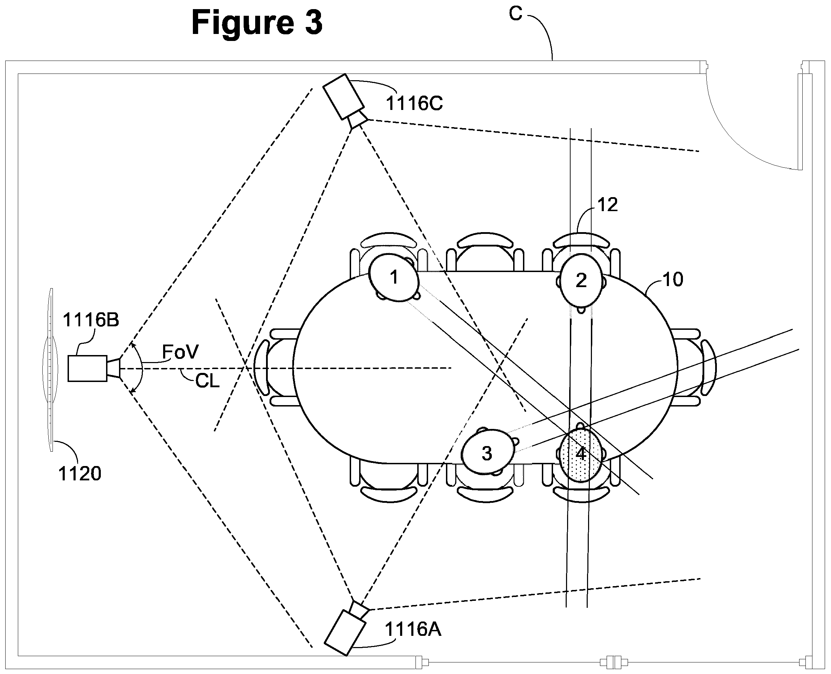

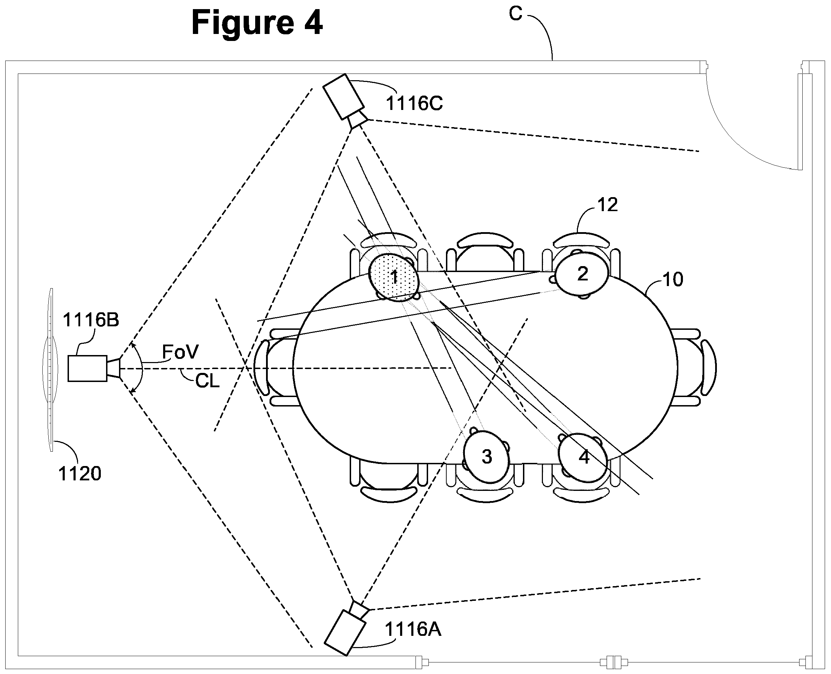

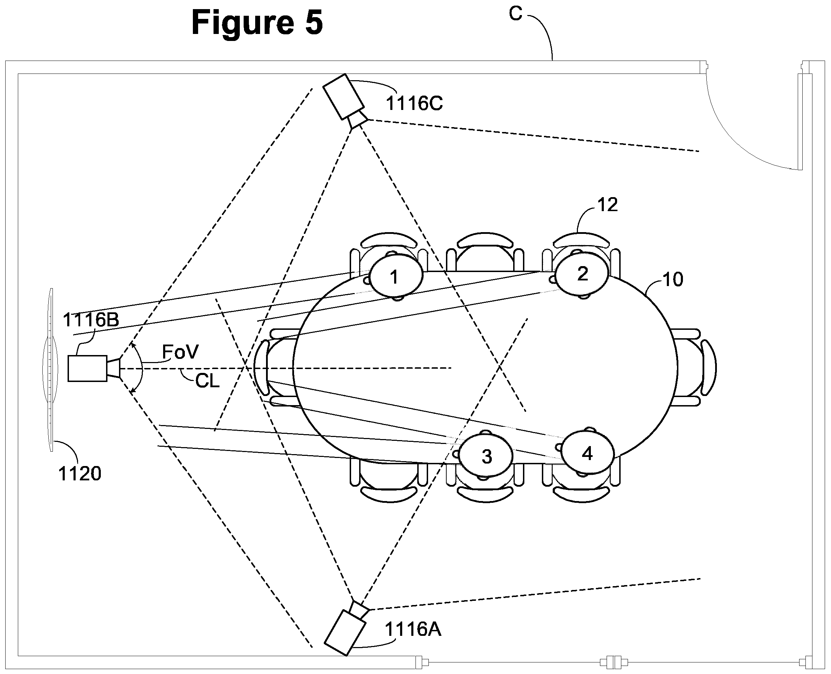

In Figure 2, individual 2 has become the speaker and now individuals 1, 3 and 4 are facing individual 2. In Figure 3, individual 4 is now speaking and individuals 1, 2 and 3 are facing individual 4. Camera 1116C has a completely clear shot to the face of individual 4. Therefore, the video stream from camera 1116C is preferred to be transmitted to the far end. In Figure 4, individual 1 is now speaking, with individuals 2, 3 and 4 facing individual 1. Cameras 1116B and 1116C both have poor views of individual 1, while camera 1116A has the best view of individual 1. In Figure 5, none of the individuals in the conference room C are speaking but rather the far end is speaking, so all of the individuals 1, 2, 3, 4 are facing the monitor 1120. As no individuals in the conference room C are speaking, camera 1116B provides the best view of the entire room and therefore the video stream from camera 1116B is provided to the far end. If individual 3 is in a conversation with a speaker from the far end, all individuals 1, 2, 3, 4 may be facing the monitor 1120, but individual 3 is speaking. Camera 1116B will have the best view of individual 3's face, so a framed version of the individual 3's face is provided to the far end, as opposed to a view of the entire room when no individuals are speaking.

It is noted in Figures 1 - 5 that each of the cameras 1116A, 1116B, 1116C can see all four individuals. This means that each of the cameras 1116A, 1116B, 1116C has the possibility of seeing the face of the speaking individual. To determine the particular individual that is speaking, the microphone array 1214 present on the primary camera 1116B is utilized with a sound source localization algorithm to determine the particular individual which is speaking and that individual's angle in the field-of-view of the particular camera. The processing of the video from the primary camera 1116B selects that angle and the appropriate area in the image to look for the face of the speaking individual. This allows the correct speaker to be located and a zoomed version of the individuals face can be provided if available and satisfactory.

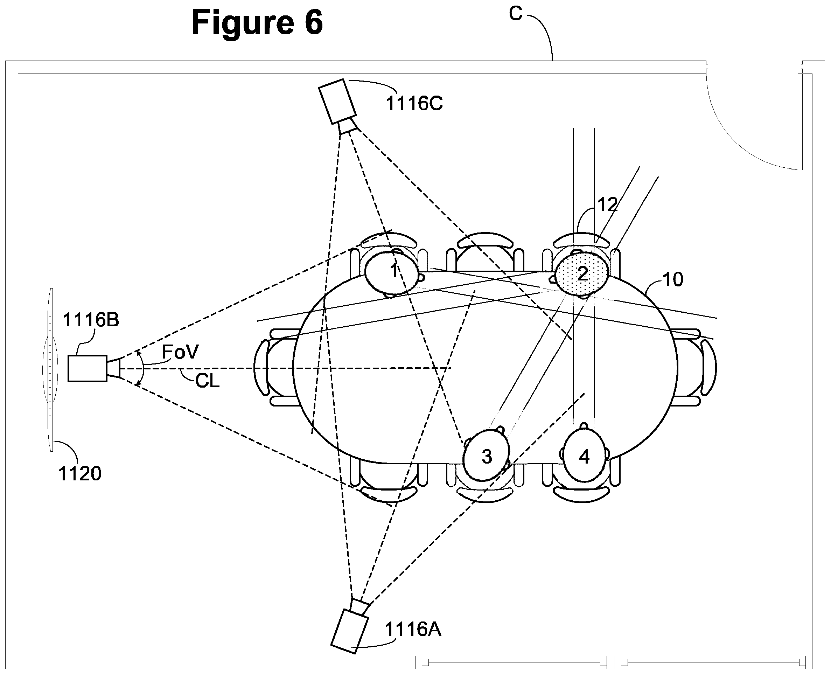

In Figure 6, it is noted that for certain implementations, the field-of-view (FOV) of the cameras 1116A, 1116B, 1116C is reduced so that not all of the individuals are necessarily in the field-of-view of a given camera. For example, the FOV are not as wide and not all individuals are in FOV of each of the cameras 1116A, 1116B, 1116C. This reduced field-of-view is used to limit selection of the camera to provide the video for transmission to the far end. For example, individual 4 is not in the field-of-view of camera 1116A and individual 2 is not in the field-of-view of camera 1116C. If individual 2 is speaking, as shown in Figure 6 by the highlighting of individual 2, the video from camera 1116C would not be utilized as it would not contain the speaker. As cameras 1116A and 1116B both have individual 2 in their fields-of-view, selection for a view of the face of the individual 2 is made from cameras 1116A or 1116B.

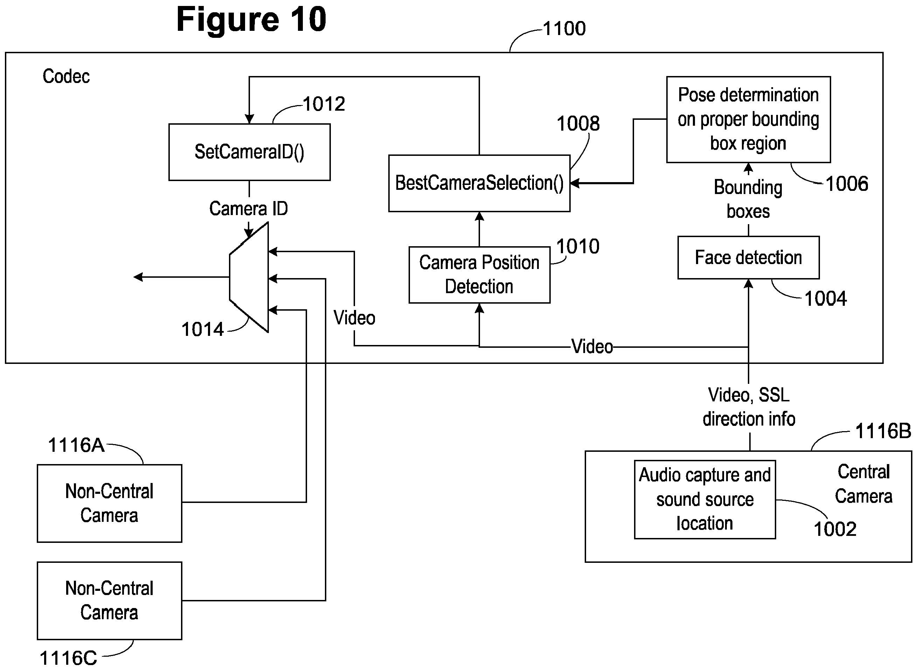

In an example, the processing of the audio and video and selection of a desired camera is split between the primary camera 1116B and a codec 1100. Referring to Figure 10, the primary camera 1116B performs sound source localization in step 1002 based on sound received at the microphone array 1214 and provides direction information. One example of performing SSL is provided in U.S. Patent No. 6,912,178, which is hereby incorporated by reference. In step 1004, an image from the primary camera 1116B video is processed by the codec 1100 to detect faces. This is preferably done using a neural network to provide a series of bounding boxes, one for each face. There are numerous variations of neural networks to perform face detection and provide bounding box outputs. Facial pose of the speaker is developed in step 1006. The SSL direction information of step 1002 is combined with the bounding boxes provided by step 1004 to select the area of the camera image to be analyzed by a neural network in step 1006 to determine the facial pose of the speaker, the direction in which the speaker is looking. As with face detection, there are numerous variations of neural networks to determine facial pose. The video stream from each of the cameras 1116A, 1116B, 1116C is also provided to a multiplexer or switch 1014 in the codec 1100 for selection of the video to be provided to the far end.

It is understood that the SSL determination, face detection and facial pose analysis is only performed periodically, not for every video frame, such as once every one second to once every five seconds in some examples. This is satisfactory as the speaker and the individual's location do not change much faster than those periods and because camera switching should not be performed rapidly to avoid disorienting the far end.

It is understood that steps 1004 and 1006 are illustrated as separate steps. The face detection and facial pose determination can be combined in a single neural network, so that steps 1004 and 1006 are then merged. Such single neural network would combine the SSL direction information and video image to determine the speaker from among the individuals and the facial pose of that individual in the processing performed by the single neural network. The actual operation of the single neural network may not operate in the order as illustrated in the serial operations of steps 1004 and 1006, as the neural network may process all of the input data in parallel, but the functional result of the operation of the single neural network will be the same as the series operation of steps 1004 and 1006, namely the facial features of the speaker.

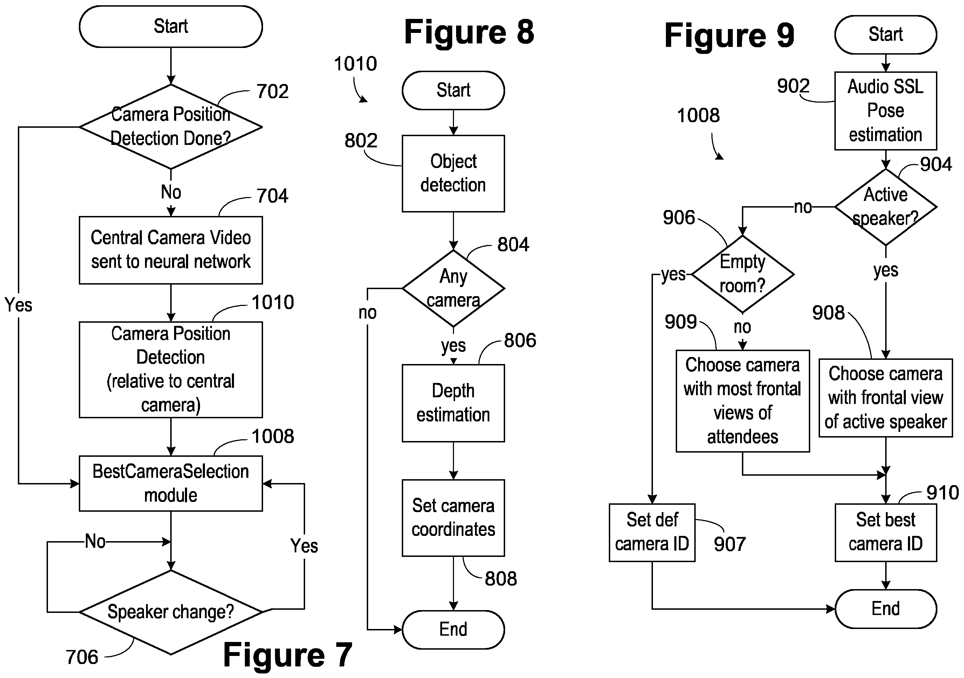

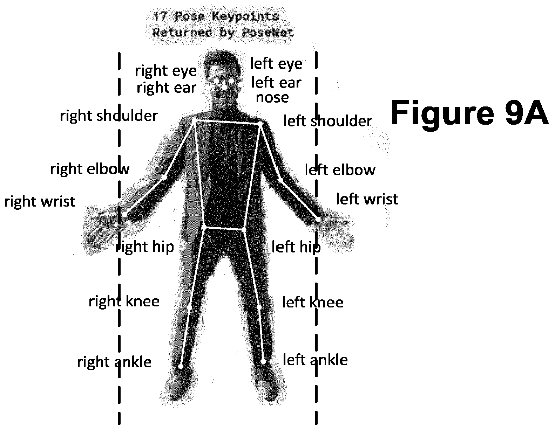

In step 1010, the codec 1100 uses the video from the primary camera 1116B to determine the locations of the other cameras 1116A, 1116C. This operation is detailed in Figure 8. In step 1008, the codec 1100 receives SSL direction information and the facial pose of the speaker. The best camera selection step 1008, shown in more detail in Figure 9, determines which of the various cameras 1116A, 1116B, 1116C has the best view of the face of speaking individual. The best camera selection step 1008 determines the particular camera 1116A, 1116B, 1116C whose video stream is to be provided to the far end. The video from the selected camera 1116A, 1116B, 1116C and the audio from microphones 1114A, 1114B connected to the codec 1100 are provided to the far end.

It is understood that the codec 1100 may perform framing operations on the video stream from the selected camera if desired, rather than providing the entire image from the selected camera. The framing process is simplified by utilizing the bounding boxes from the cameras. Additionally, the codec 1100 may provide video from other cameras based on framing considerations, such as if two individuals are having a conversation. The steps of Figure 10 provide the information of the best camera to capture the speaker's face and that information is one input into framing and combining operations of the codec 1100, which are not shown.

Figure 7 is a high-level flowchart of the interaction of the best camera selection step 1008 and the camera position detection step 1010. In step 702, it is determined if the camera positions have been determined. If not determined, the video from the central camera 1116B is provided to neural network in the codec to help determine camera position. Then the camera position detection step 1010 is performed as described below. If the camera positions have been determined in step 702 or after detection in step 1010, best camera selection step 1008 is performed. When the best camera is selected, in step 1012 that camera is set as the camera ID. Step 706 determines if the speaker has changed. This can be done by monitoring the SSL direction information for changes. If the direction angle changes sufficiently or the SSL direction information is stopped, as when there is no speaker, or started, as when a speaker starts after a period of no one in the conference room C speaking, then the speaker likely has changed, and the best camera selection step 1008 is executed.

Referring to Figure 8, the camera position detection step 1010 is illustrated. Implementations can provide for camera position detection during installation of cameras in an environment (e.g., conference room), can be performed periodically, or can be performed on demand from a user. In step 802, object detection is performed on an image from the primary camera 1116B. In installing the system, the primary camera 1116B is identified and the other cameras 1116A, 1116C are instructed to be placed in the field-of-view of the primary camera 1116B. The object detection of step 802 finds the other cameras 1116A, 1116C. This is preferably done using a neural network and provides bounding boxes and x and y coordinates with respect to the primary camera 1116B. In step 804, it is determined if any cameras have been found. If not, camera detection ends and the central camera 1116B is identified as the only camera. Assuming the other cameras 1116A and 1116C are found in the FOV of primary camera 1116B, a depth/distance estimation from primary camera 1116B of each camera 1116A and 1116C is performed in stop 806. This depth estimation is preferably performed using a neural network on the cameras in the bounding boxes, though techniques may be used. A depth value z results, so that now the x, y, z coordinates of each camera in relation to the primary camera are known. In step 808, these coordinates are matched to a camera identification to provide the entry into a camera table. These coordinates are used with the facial pose information to determine the best camera to view the face of the speaker.

Referring to Figure 9, the best camera selection step 1008 is illustrated in more detail. In step 902, the SSL direction information and facial pose information is received. In step 904, the SSL directional information is evaluated to determine if there is an active speaker. If not, in step 906, it is determined if there are attendees or the conference room C is empty. If the conference room C is empty, in step 907 a default camera ID is set, typically the primary camera 1116B. If there are attendees, in step 909 the camera with the most frontal views of the attendees is determined. This determination can be done using facial recognition techniques. There are many known facial recognition techniques. In one example, a keypoint evaluation is performed. In most cases a neural network is used to develop keypoints or similar detailed pose information. Exemplary keypoints are illustrated in Figure 9A. For each keypoint, there is score and position information. The higher the score, the more likely the feature is present. For example, if the nose score is 0.99, then the possibility of the nose feature is 99%. Pseudocode for the evaluation of step 909 is provided in Table 1

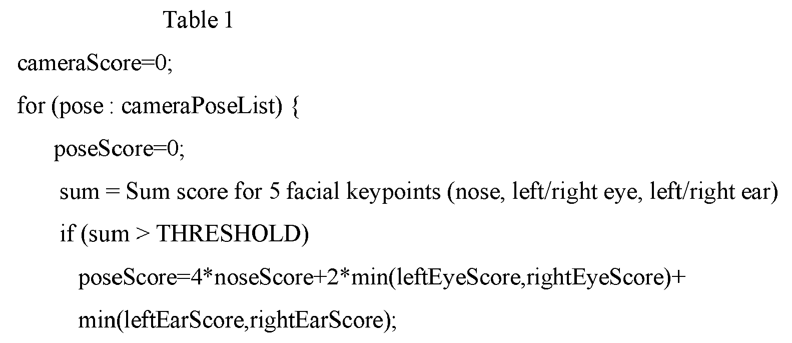

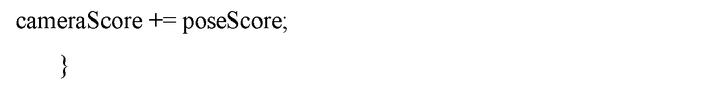

In one example, THRESHOLD is set at 2.5, so that a poseScore is computed when the possibility of a face is higher than 50%. Different weights are used for each facial keypoint as some keypoints, such as the nose, are more important. The cameraScore is the sum of the poseScores for each face in the camera image. For step 909, the highest cameraScore is the selected camera.

In some examples, because distances from the cameras vary and camera settings vary, various correction factors are applied to each poseScore. Each poseScore as computed above is multiplied by a sizescaleFactor and a brightness ScaleFactor. sizeScaleFactor is computed by comparing the face bounding box of two poses. brightnessScaleFactor is computed by comparing the average luminance level of corresponding face bounding box of two poses. sizeScaleFactor = (pose1FaceBoundingBoxArea / pose2FaceBoundingBoxArea);
brightnessScaleFactor=(pose1FaceBoundingBoxBrightness/pose2FaceBoundingBox Brightness);
Other normalization methods can be applied in calculation of poseScore from the primary camera.

In step 910, the determined best camera ID is set. If there is an active speaker in step 904, in step 908 the facial pose information and the determined camera locations are evaluated to determine which camera has the best view of the face of the speaker. In some instances, the facial pose information may indicate a particular camera would have the best view of the speaker, but the speaker might be blocked in the field-of-view of that camera for some reason (e.g., another person in the room blocking the speaker from the camera). Referring to Figure 2, facial pose calculations will indicate that camera 1116A has the best frontal view of the speaker 2. However, in Figure 2, individual 3 is actually blocking the view of speaker 2 for camera 1116A. Therefore, in some examples, a quick facial detection from the calculated best camera image is performed to address possible blocking situations. If the facial detection indicates a poor or inadequate view, then the second-choice camera is used. In step 910, the determined best camera ID is set.

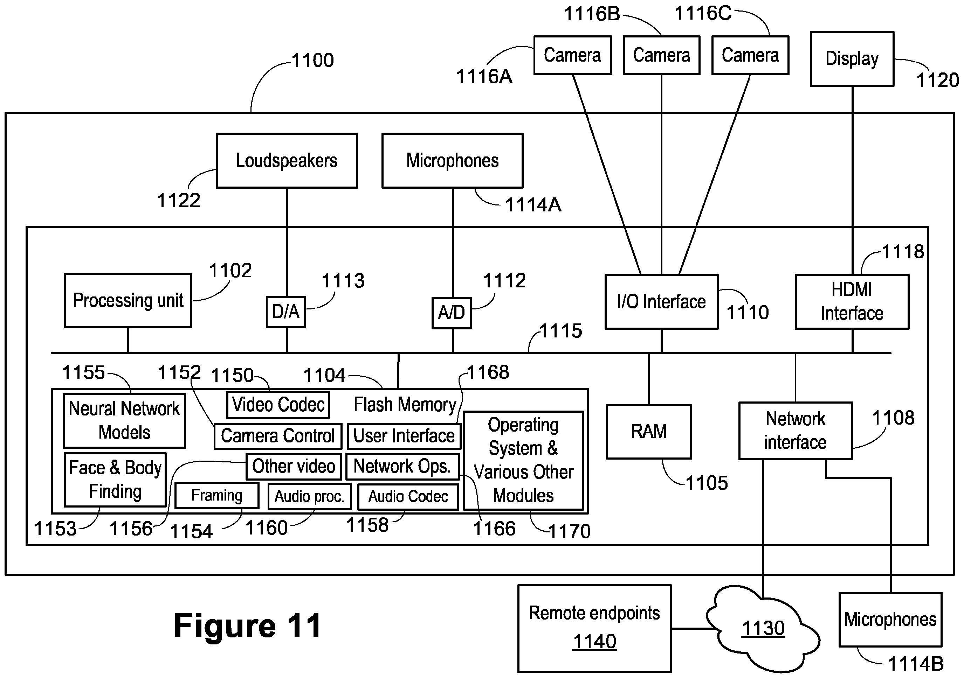

Figure 11 illustrates aspects of a codec 1100 in accordance with an example of this disclosure. The codec 1100 may include loudspeaker(s) 1122, though in many cases the loudspeaker 1122 is provided in the monitor 1120, and microphone(s) 1114A interfaced via interfaces to a bus 1115, the microphones 1114A through an analog to digital (A/D) converter 1112 and the loudspeaker 1122 through a digital to analog (D/A) converter 1113. The codec 1100 also includes a processing unit 1102, a network interface 1108, a flash memory 1104, RAM 1105, and an input/output (I/O) general interface 1110, all coupled by bus 1115. The camera(s) 1116A, 1116B, 1116C are illustrated as connected to the I/O interface 1110. Microphone(s) 1114B are connected to the network interface 1108. An HDMI interface 1118 is connected to the bus 1115 and to the external display or monitor 1120. Bus 1115 is illustrative and any interconnect between the elements can used, such as Peripheral Component Interconnect Express (PCIe) links and switches, Universal Serial Bus (USB) links and hubs, and combinations thereof. The cameras 1116A, 1116B, 1116C and microphones 1114A, 1114B can be contained in housings containing the other components or can be external and removable, connected by wired or wireless connections.

The processing unit 1102 can include digital signal processors (DSPs), central processing units (CPUs), graphics processing units (GPUs), dedicated hardware elements, such as neural network accelerators and hardware codecs, and the like in any desired combination.

The flash memory 1104 stores modules of varying functionality in the form of software and firmware, generically programs, for controlling the codec 1100. Illustrated modules include a video codec 1150, camera control 1152, face and body finding 1153, neural network models 1155, framing 1154, other video processing 1156, audio codec 1158, audio processing 1160, network operations 1166, user interface 1168 and operating system and various other modules 1170. The RAM 1105 is used for storing any of the modules in the flash memory 1104 when the module is executing, storing video images of video streams and audio samples of audio streams and can be used for scratchpad operation of the processing unit 1102. The face and body finding 1153 and neural network models 1155 are used in the various operations of the codec 1100, such as the face detection step 1004, the pose determination step 1006, the object detection step 802 and the depth estimation step 806.

The network interface 1108 enables communications between the codec 1100 and other devices and can be wired, wireless or a combination. In one example, the network interface 1108 is connected or coupled to the Internet 1130 to communicate with remote endpoints 1140 in a videoconference. In one or more examples, the general interface 1110 provides data transmission with local devices such as a keyboard, mouse, printer, projector, display, external loudspeakers, additional cameras, and microphone pods, etc.

In one example, the cameras 1116A, 1116B, 1116C and the microphones 1114 capture video and audio, respectively, in the videoconference environment and produce video and audio streams or signals transmitted through the bus 1115 to the processing unit 1102. In at least one example of this disclosure, the processing unit 1102 processes the video and audio using algorithms in the modules stored in the flash memory 1104. Processed audio and video streams can be sent to and received from remote devices coupled to network interface 1108 and devices coupled to general interface 1110. This is just one example of the configuration of a codec 1100.

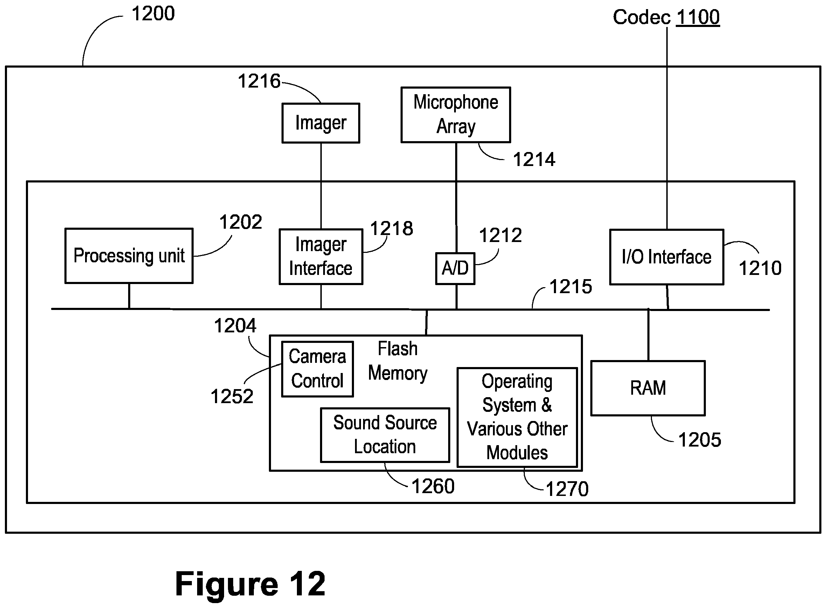

Figure 12 illustrates aspects of a camera 1200, in accordance with an example of this disclosure. The camera 1200 includes an imager or sensor 1216 and a microphone array 1214 interfaced via interfaces to a bus 1215, the microphone array 1214 through an analog to digital (A/D) converter 1212 and the imager 1216 through an imager interface 1218. The camera 1200 also includes a processing unit 1202, a flash memory 1204, RAM 1205, and an input/output general interface 1210, all coupled by bus 1215. Bus 1215 is illustrative and any interconnect between the elements can used, such as Peripheral Component Interconnect Express (PCIe) links and switches, Universal Serial Bus (USB) links and hubs, and combinations thereof. The codec 1100 is connected to the I/O interface 1210, preferably using a USB interface.

The processing unit 1202 can include digital signal processors (DSPs), central processing units (CPUs), graphics processing units (GPUs), dedicated hardware elements, such as neural network accelerators and hardware codecs, and the like in any desired combination.

The flash memory 1204 stores modules of varying functionality in the form of software and firmware, generically programs, for controlling the camera 1200. Illustrated modules include camera control 1252, sound source localization 1260 and operating system and various other modules 1270. The RAM 1205 is used for storing any of the modules in the flash memory 1204 when the module is executing, storing video images of video streams and audio samples of audio streams and can be used for scratchpad operation of the processing unit 1202.

In a second configuration, only the primary camera 1116B includes the microphone array 1214 and the sound source location module 1260. Cameras 116A, 116C are then just simple cameras. The prior examples allowed primary camera selection to be done after the cameras are installed, as all of the cameras are the same. In this configuration, during setup of the conference room C the primary camera, with its extra functions, must be identified and properly placed. In a third configuration, the sound source localization is also performed by the codec, with the primary camera 1116B providing the audio streams from each microphone.

Other configurations, with differing components and arrangement of components, are well known for both videoconferencing endpoints and for devices used in other manners.

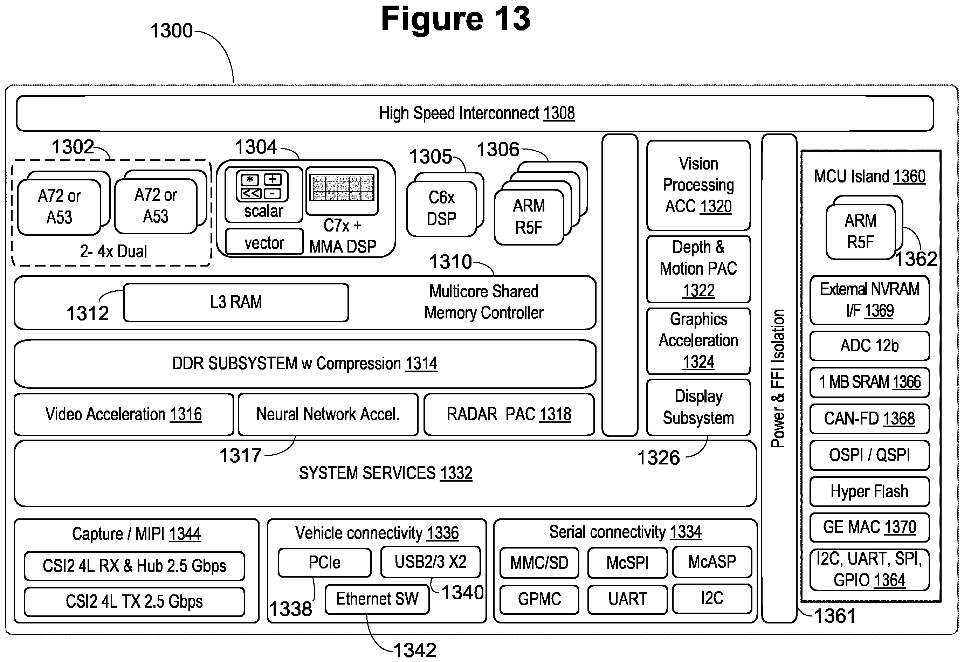

Figure 13 is a block diagram of an exemplary system on a chip (SoC) 1300 as can be used as the processing unit 1102 or 1202. A series of more powerful microprocessors 1302, such as ARM^{®} A72 or A53 cores, form the primary general-purpose processing block of the SoC 1300, while a more powerful digital signal processor (DSP) 1304 and multiple less powerful DSPs 1305 provide specialized computing capabilities. A simpler processor 1306, such as ARM R5F cores, provides general control capability in the SoC 1300. The more powerful microprocessors 1302, more powerful DSP 1304, less powerful DSPs 1305 and simpler processor 1306 each include various data and instruction caches, such as L1I, LID, and L2D, to improve speed of operations. A high-speed interconnect 1308 connects the microprocessors 1302, more powerful DSP 1304, simpler DSPs 1305 and processors 1306 to various other components in the SoC 1300. For example, a shared memory controller 1310, which includes onboard memory or SRAM 1312, is connected to the high-speed interconnect 1308 to act as the onboard SRAM for the SoC 1300. A DDR (double data rate) memory controller system 1314 is connected to the high-speed interconnect 1308 and acts as an external interface to external DRAM memory. The RAM 1105 or 1205 are formed by the SRAM 1312 and external DRAM memory. A video acceleration module 1316 and a radar processing accelerator (PAC) module 1318 are similarly connected to the high-speed interconnect 1308. A neural network acceleration module 1317 is provided for hardware acceleration of neural network operations. A vision processing accelerator (VPACC) module 1320 is connected to the high-speed interconnect 1308, as is a depth and motion PAC (DMPAC) module 1322.

A graphics acceleration module 1324 is connected to the high-speed interconnect 1308. A display subsystem 1326 is connected to the high-speed interconnect 1308 to allow operation with and connection to various video monitors. A system services block 1332, which includes items such as DMA controllers, memory management units, general-purpose I/O's, mailboxes and the like, is provided for normal SoC 1300 operation. A serial connectivity module 1334 is connected to the high-speed interconnect 1308 and includes modules as normal in an SoC. A vehicle connectivity module 1336 provides interconnects for external communication interfaces, such as PCIe block 1338, USB block 1340 and an Ethernet switch 1342. A capture/MIPI module 1344 includes a four-lane CSI-2 compliant transmit block 1346 and a four-lane CSI-2 receive module and hub.

An MCU island 1360 is provided as a secondary subsystem and handles operation of the integrated SoC 1300 when the other components are powered down to save energy. An MCU ARM processor 1362, such as one or more ARM R5F cores, operates as a master and is coupled to the high-speed interconnect 1308 through an isolation interface 1361. An MCU general purpose I/O (GPIO) block 1364 operates as a slave. MCU RAM 1366 is provided to act as local memory for the MCU ARM processor 1362. A CAN bus block 1368, an additional external communication interface, is connected to allow operation with a conventional CAN bus environment in a vehicle. An Ethernet MAC (media access control) block 1370 is provided for further connectivity. External memory, generally non-volatile memory (NVM)such as flash memory 104, is connected to the MCU ARM processor 1362 via an external memory interface 1369 to store instructions loaded into the various other memories for execution by the various appropriate processors. The MCU ARM processor 1362 operates as a safety processor, monitoring operations of the SoC 1300 to ensure proper operation of the SoC 1300.

It is understood that this is one example of an SoC provided for explanation and many other SoC examples are possible, with varying numbers of processors, DSPs, accelerators and the like.

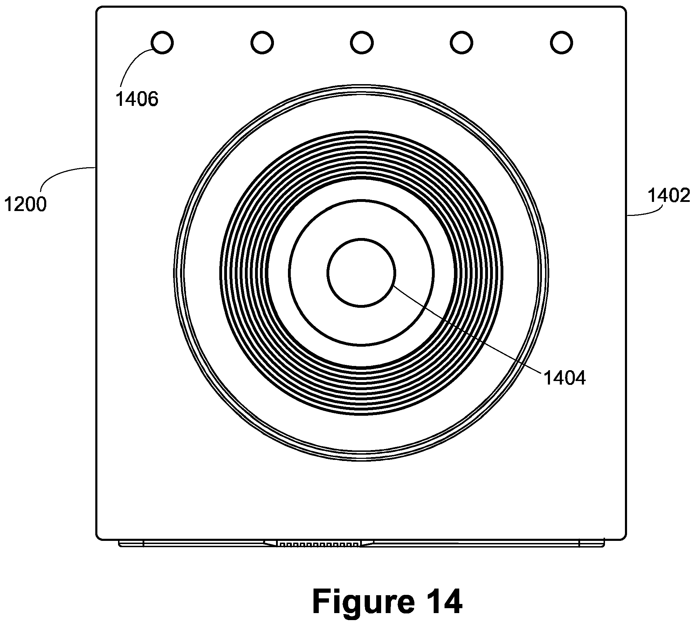

Figure 14 provides a front view of a camera 1200, such as the camera 1116B and, optionally, the cameras 1116A and 1116C. The camera 1200 is a housing 1402 with a lens 1404 provided in the center to operate with the imager 1216. A series of five openings 1406 are provided as ports to the microphones in the microphone array 1214. It is noted that the microphone openings 1406 form a horizontal line to provide the desired angular determination for the sound source localization algorithm. This is an exemplary illustration of a camera 1200 and numerous other configurations are possible, with varying lens and microphone configurations.

Implementations described above, discuss determining an active speaker's best view. It is also contemplated that that in certain implementations, the best view of individuals or participants in a conference room are also determined at any given time, regardless of whether an individual is an active speaker or not.

In various implementations, a single stream video composition is provided to the far end conference site or sites (i.e., far end as described above). As further described herein, a best view of each of the individuals or participants in the conference room is taken, and a composite of the views is provided.

For example, in conference room with one camera, wherein the camera is implemented in a device such as video bar as described above, six individuals or participants enter the conference room. A composited video stream of the six individuals or participants is sent or fed to the far end. Implementations further provide for multiple streams to be provided, as well as the use of more than one (i.e., multiple cameras), where the best view from the best camera of the individuals or participants is used. As further described below, various embodiments provide for a production module to perform such functions.

Various described implementations above provide that where one or more cameras (i.e., multiple cameras) are used, the multi-camera selection algorithm provides that secondary cameras do not implement the described machine learning features that implement neural networks, and are considered as "dumb" secondary cameras. Only the primary camera implements the described machine learning that includes neural networks. For example, implementations include third party USB cameras as "dumb" secondary cameras. As discussed, in various embodiments, the primary camera is can be a video bar, pan-tilt zoom cameras or other type of camera. Implementations further provide that such cameras be connected to connect to a computing device, such as a codec.

In the following implementations, all of the plurality of cameras implement the use of machine learning. In various implementations, a checking camera operation is performed. The checking camera operation is implemented to monitor a chosen camera and determine if the chosen camera, as identified camera ID, is no longer the best camera option to perform video streaming. If not, a new best camera, with new camera ID, is found as described above.

Implementations provide that over a certain time period (e.g., 1 or 2 seconds), determined facial keypoints and sound levels of the chosen camera are checked as described in Figure 9. The chosen camera is identified by a default camera ID. If the results from checking the facial keypoints and sound levels indicate detection of facial keypoints and sound levels, there is an indication that one or more individuals or participants are in the view of the chosen camera. Then the best camera operations are performed as described herein. If the checking results indicate that there are no individuals or participants in the view of the chosen camera, the chosen camera and its default camera ID are kept.

Implementations further provide a determination of a front view of a speaker as described in Figure 9 above. A determination is performed as to the checked facial keypoints and sound levels of the chosen camera. If the results of the checked facial keypoints and sound levels of the chosen camera indicate a front view, then the chosen camera continues to be used. If the checking results indicate no detection of a front view, the best camera operations are performed as described herein.

It is contemplated that in other implementations, such secondary cameras implement machine learning as described herein, including face detection, pose detection, etc.

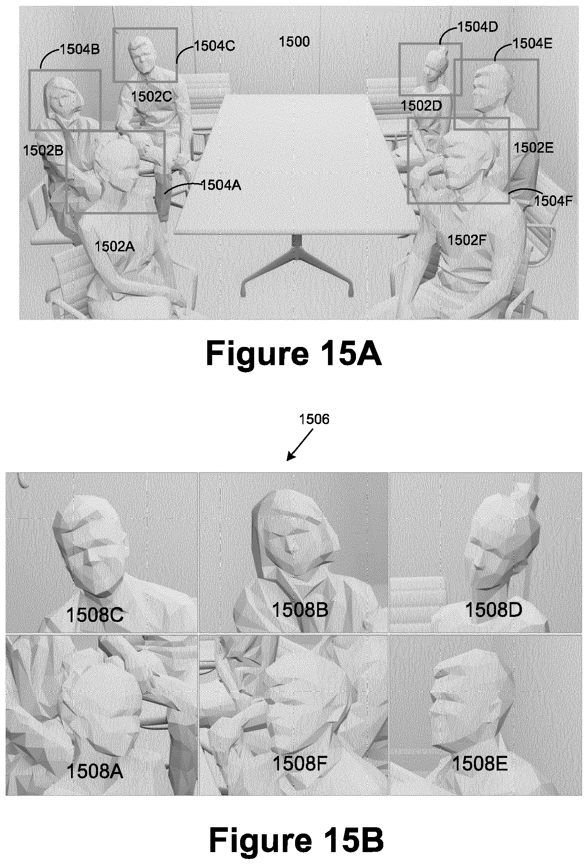

Figures 15A and 15B illustrate a framing example with multiple secondary cameras that implement machine learning features. In particular, such secondary cameras implement machine learning to find the faces of the individuals or participants with the best frontal view and send a framed face rectangle information with meta data to a primary camera. The primary camera includes a central control logic to create a single stream with the best overall composition of all rectangles from all cameras.

Figure 15A illustrates a conference room 1500 that includes six individuals or participants, 1502A, 1502B, 1502C, 1502D, 1502E, 1502F. Each of the participants or individuals 1502 are processed with framed face rectangle information as represented by respective bounding boxes 1504A, 1504B, 1504C, 1504D, 1504E, 1504F.

Figure 15B illustrates a composite picture 1506 of individual best views 1508. of the participant or individuals 1500, as defined by their respective bounding boxes 1504. In specific, the composite picture 1506 includes best views 1508A, 1508B, 1508C, 1508D, 1508E, 1508F. Implementations provide for the composed picture 1506 to be sent from the primary camera to the far end.

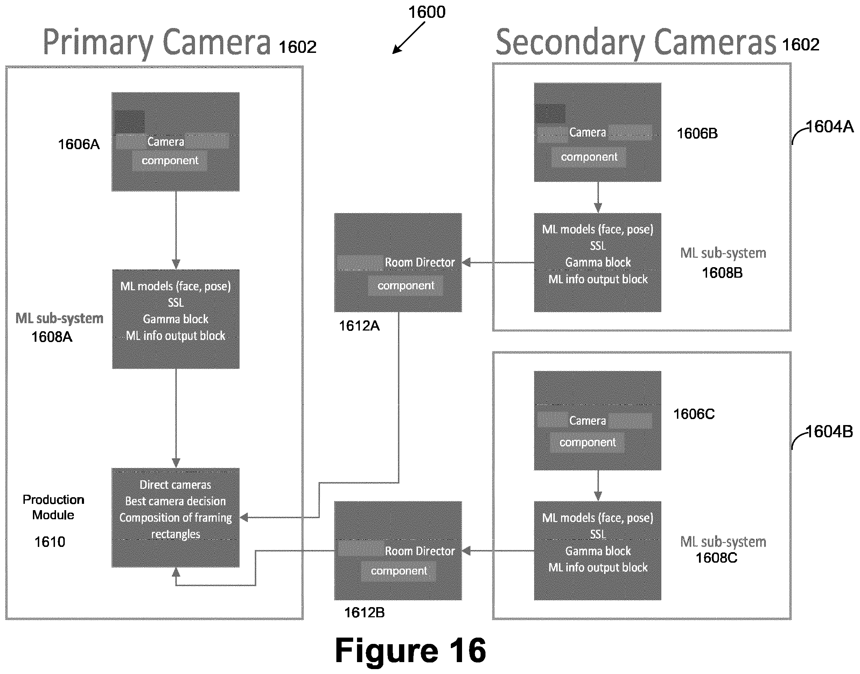

Figure 16 illustrates a multi-camera system 1600 to provide composite of best views of individuals or participants. The system 1600 is arranged to select a camera of a plurality of cameras, each with a different view of a group of individuals in an environment and providing a video stream in a videoconference call to at least one far end site, wherein a primary camera of the plurality of cameras is coupled to a microphone array to provide a video stream for provision to the at least one far end site(s), the system. In this example the multi-camera system 1600 includes a primary camera 1602 and secondary cameras 1604A and 1604B. Various embodiments provide that cameras 1602 and 1604 are implemented as the camera 1200 described in Figure 12. Implementations provide for the elements described in Figure 16 to be further included in the camera 1200 of Figure 12. The cameras 1604A and 1604 include machine learning features as described herein.

Implementations provide for each of the cameras 1604A and 1604 to include respective camera components 1606A, 1606B, and 1606C. Implementations also provide each of the cameras 1604A and 1604 to include respective machine learning (ML) sub-systems 1608A, 1608B, and 1608C.

The respective camera components 1606 sends video frames to their respective ML subsystems 1608. The ML subsystems 1608 implements the described ML models for face and pose detection, SSL feed ML output to a Gamma block and sends filtered output from Gamma block as described above to a production module 1610 of primary camera 1602. The Gamma block filters the ML bounding boxes described in Figure 15A, with motion and timing logic to reduce false positives and negatives. Implementations provide for respective room director components 1612A and 1612B to support secondary camera 1604A and 1604B. In particular, room director component 1612A sends output from Gamma block of ML subsystem 1608A to production module 1610, and room director component 1612B sends output from Gamma block of ML subsystem 1608B to production module 1610.

Implementations provide for the production module 1610 to be a central processing unit. The production module 1610 determines best camera selection and composition of all framing rectangles into a proper frame to be send to the far side.

Implementations provide for a machine learning-based approach for automatic re-identification of the individuals or participants across multiple cameras of multi-camera system 1600. In such implementations, the same individual or participant receives an identical identifier across the multiple cameras.

The production module1610 receives bounding box, feature vector, poses, and SSL for the detected faces of individuals or participants. Re-identification is performed through, for example, cosine distance matching of feature vectors. Pose information is used to find the best frontal view of participants. SSL, as described above, can be used to find the active speaker. The production module 1610 combines individual or participant identification, best frontal view, and active speaker to perform determination as to the best camera selection and composition of framing for the far side. For certain implementations, if there is an active speaker, the best frontal view of active speaker is shown. If no such active speaker, the best frontal view of each participant or the whole group is shown.

While the above description has used a conference room as the exemplary environment, the environment can be any setting where multiple cameras can provide different views of a group of individuals.

While the above description has used three cameras as an example, it is understood that different numbers of cameras can be utilized from two to a limit depending on the processing capabilities and the particular environment. For example, in a larger venue with more varied seating, more cameras may be necessary to cover all individuals that may speak.

While the above description had the camera selection being performed in a codec, it is understood that different items can perform the camera selection. In one example, one camera of the number of cameras can be selected to perform the camera selection and to interact with the other cameras to control the provision of video streams from the cameras. In another example, a separate video mixing unit can perform the camera selection and other video processing and the codec can simply encode the selected camera video stream.

The various examples described are provided by way of illustration and should not be construed to limit the scope of the disclosure. Various modifications and changes can be made to the principles and examples described herein without departing from the scope of the disclosure and without departing from the claims which follow.

Computer program instructions may be stored in a non-transitory processor readable memory that can direct a computer or other programmable data processing apparatus, processor or processors, to function in a particular manner, such that the instructions stored in the non-transitory processor readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

The present invention is well adapted to attain the advantages mentioned as well as others inherent therein. While the present invention has been depicted, described, and is defined by reference to particular embodiments of the invention, such references do not imply a limitation on the invention, and no such limitation is to be inferred. The invention is capable of considerable modification, alteration, and equivalents in form and function, as will occur to those ordinarily skilled in the pertinent arts. The depicted and described embodiments are examples only and are not exhaustive of the scope of the invention.

Consequently, the invention is intended to be limited only by the spirit and scope of the appended claims, giving full cognizance to equivalents in all respects.

## Claims

1. A method for selecting a camera of a plurality of cameras, each with a different view of a group of individuals in an environment and providing a video stream in a videoconference call to at least one far end site, wherein a primary camera of the plurality of cameras is coupled to a microphone array, to provide a video stream for provision to the at least one far end site(s), the method comprising:
identifying locations of the plurality of cameras other than the primary camera using an image from the video stream of the primary camera;
utilizing sound source localization using the microphone array to determine direction information;
identifying a speaker in the group of individuals using the sound source localization direction information and an image from the video stream of the primary camera;
determining a facial pose of the speaker in the image from the video stream of the primary camera; and
selecting a camera from the plurality of cameras to provide the video stream for provision to the at least one far end site based on the identified locations of the plurality of cameras other than the primary camera and the determined facial pose of the speaker.

2. The method of claim 1, wherein selecting a camera from the plurality of cameras comprises:
selecting the camera providing the best view of the face of the speaker when there is a speaker;
selecting the camera providing the most facial views of attendees when there is not a speaker and there are attendees; and
selecting a default camera when there are no attendees.

3. The method of claim 1, wherein the sound source localization and machine learning based on neural networks is performed by either the primary camera or a processor coupled to the primary camera.

4. The method of claim 1, further comprising receiving audio from each microphone in the microphone array to perform a sound source localization algorithm to determine a particular attendee which is speaking.

5. The method of claim 1, wherein sound source localization and machine learning based on neural networks are implemented by the primary smart camera and no sound source localization and machine learning based on neural networks are implemented by secondary cameras.

6. The method of claim 1, wherein sound source localization and machine learning based on neural networks are implemented by the smart camera and secondary smart cameras.

7. The method of claim 1 further comprising determining over a period of time if the selected camera continues to be the default camera.

8. A system for selecting a camera of a plurality of cameras, each with a different view of a group of individuals in an environment and providing a video stream in a videoconference call to at least one far end site, wherein a primary camera of the plurality of cameras is coupled to a microphone array to provide a video stream for provision to the at least one far end site(s), the system comprising:
a primary camera that receives video from an environment that includes a secondary camera and a group of individuals, wherein the primary camera identifies locations of the secondary cameras using an image from the video stream;
a microphone array that implements sound source location to determine direction information to a speaker in the group of individuals using the sound source localization direction information and an image from the video stream of the primary camera; and
processing unit coupled to the primary camera to determine facial pose of the speaker in the image from the video stream of the primary camera; and select a camera from the plurality of cameras to provide the video stream for provision to the far end based on the locations of the plurality of cameras other than the primary camera and the facial pose of the speaker.

9. The system of claim 8, wherein selecting a camera from the plurality of cameras comprises:
selecting the camera providing the best view of the face of the speaker when there is a speaker;
selecting the camera providing the most facial views of attendees when there is not a speaker and there are attendees; and
selecting a default camera when there are no attendees.

10. The system of claim 8 further comprising receiving audio from each microphone in the microphone array to perform a sound source localization algorithm to determine a particular individual which is speaking.

11. The system of claim 8, wherein machine learning based on neural networks is implemented by the primary camera for individual face and pose detection.

12. The system of claim 8, wherein machine learning based on neural networks is implemented by the primary camera and the secondary cameras for individual face and pose detection.

13. The system of claim 12 further comprising a production module bounding boxes of images, feature vectors, poses, and SSL for detected faces of individuals from the primary and secondary cameras.

14. The system of claim 13 further comprising room director components for the secondary components which send output of machine learning of the secondary cameras to the production module.

15. The system of claim 8 further comprising determining by the processing unit over a period of time if the selected camera continues to be the default camera.
